# EUROPÄISCHE PATENTSCHRIFT

(11) **EP 0 528 879 B1**
(45) Veröffentlichungstag und Bekanntmachung des Hinweises auf die Patenterteilung: **22.06.1994**
(21) Anmeldenummer: 91909104.1
(22) Anmeldetag: 13.05.1991
(51) Int. Cl.: B32B 5/18

(54) **VERFAHREN ZUR HERSTELLUNG EINES VERBUNDKÖRPERS AUS POLYPROPYLEN**
PROCESS FOR PRODUCING A COMPOSITE FROM POLYPROPYLENE
PROCEDE POUR LA FABRICATION D'UN CORPS COMPOSITE EN POLYPROPYLENE

(30) Priorität: 16.05.1990 DE 4015739
(43) Veröffentlichungstag der Anmeldung: 03.03.1993
(73) Patentinhaber: HOECHST AKTIENGESELLSCHAFT, 65926 Frankfurt am Main (DE)
(72) Erfinder: VOWINKEL, Hans, D-6093 Flörsheim am Main (DE); GÜBITZ, Franz, D-6233 Kelkheim (DE); ORTH, Rolf, D-6093 Flörsheim am Main (DE)
(86) Internationale Anmeldenummer: EP9100884
(87) Internationale Veröffentlichungsnummer: WO9117882

(56) Entgegenhaltungen:
- EP-A- 0 231 013
- GB-A- 1 226 053
- GB-A- 1 346 780

## Beschreibung

### Verfahren zur Herstellung eines Verbundkörpers aus Polypropylen

Die Erfindung bezieht sich auf ein Verfahren zur Herstellung eines Verbundkörpers bestehend aus mindestens einer massiven, durch Spritzgießen hergestellten Trägerschicht aus einem Propylenpolymerisat und einer Schaumschicht aus einem Propylenpolymerisat, durch Verbinden der beiden Schichten.

Entsorgung und Recycling von Kunststoffteilen, vorzugsweise im Automobilbereich, sind zu einen zentralen Thema geworden. Viele Konzepte zur Wiederaufbereitung und Wiederverwertung von Kunststoffabfällen wurden bereits entwickelt. Probleme bereitet jedoch das Recycling von Verbundsystemen, bei denen die Einzelkomponenten aus unterschiedlichen Polymeren bestehen. Unter diesem Aspekt werden deshalb Konstruktionen angestrebt, die vollständig aus dem gleichen Grundwerkstoff bestehen.

Bei den hierbei in Frage kommenden Anwendungen handelt es sich vorrangig um solche, die stoßabsorbierende, schalldämmende, wärmeisolierende oder sicherheitstechnische Aufgaben erfüllen müssen. Einige Beispiele aus dem Automobilbereich seien hier angeführt:
Instrumententafeln, Stoßfänger, Kopfstützen, Türseitenverkleidungen, Armlehnen, u.a.

Für diese Anwendungen wurden bisher meist Kombinationen folgender Werkstoffe verwendet:
Acrylnitril-Butadien-Styrol-Polymerisate, Polyphenylenoxid-Blends, polyvinylchlorid, Polyurethan, Polypropylen, Polymethylmethacrylat (ABS, PPO, Blends, PVC, PU, PP, PMMA) sowie eine Reihe anderer Werkstoffe wie Textilien oder Holzfaserformstoffe.

Die Umstellung auf Einzelkomponenten mit gleicher Werkstoffbasis, beispielsweise bei einem Verbundkörper aus Träger (Insert)-Schaumstoff-Dekorfolie, erfordert neue Methoden in der Verbindungstechnik.

Bekannt ist ein Verfahren zur Herstellung eines Folienlaminats, bei welchem eine unverschäumte Polymerschicht mit einer nicht komprimierten Schaumschicht zusammengebracht und bei einer Temperatur oberhalb des Erweichungspunktes der unverschäumten Polymerschicht zusammengepreßt wird (vgl. GB 1,226,053). Das Material verbleibt am Ende im komprimierten Zustand. Weiterhin ist ein Verfahren bekannt zur Herstellung eines Folienlaminats, bei welchem ein unverschäumtes Polymer als Schmelze auf eine Schaumschicht extrudiert wird (vgl. GB 1,346,780).
Nach diesem Verfahren läßt sich ein massiver Trägerkörper nicht mit einer Schaumschicht verbinden.
Es wurde nun gefunden, daß eine feste und dauerhafte Verbindung zwischen Trägerschicht und Schaumschicht bereits durch Verschweißen erzielt werden kann.

Die Erdingung betrifft somit ein Verfahren gemäß Patentanspruch 1.

Die Erfindung betrifft weiterhin den durch dieses Verfahren hergestellten Verbundkörper.

Die Trägerschicht besteht beispielsweise aus einem Propylenpolymerisat aus
a) 100 bis 50, vorzugsweise 90 bis 60 Gew.-Teilen isotaktischem Polypropylen oder Mischpolymersaten des Propylen mit bis zu 25 Gew.-Teilen Ethylen,
b) 0 bis 40, vorzugsweise 10 bis 20 Gew.-Teilen kautschukartiger, mit Polypropylen verträglicher Mischpolymerisate und
c) 0 bis 50, vorzugsweise 20 bis 40 Gew.-Teilen verstärkender Füllstoffe.

Das Propylenpolymerisat kann jedoch auch ein Blockcopolymerisat mit 1 bis 40 Gew.-% einpolymerisiertem Ethylen sein.

Vorzugsweise wird ein Homo- oder Copolymer des Propylens mit einem Schmelzindex MFI 230/5 nach DIN 53 735 von 5 bis 25 g/10 min verwendet.

Als kautschukartige Mischpolymerisate eignen sich vor allem amorphe Mischpolymerisate aus 30 - 70 Gew.-% Ethylen und 70 - 30 Gew.-% Propylen, Terpolymerisate aus Ethylen, Propylen und bis zu 5 Gew.-% Dienen, vorzugsweise Ethylidennorbornen oder 1,4-Hexadien.

Als verstärkende Füllstoffe werden vorzugsweise Talkum, Kreide, Holzmehl, Glasfasern oder Glaskugeln eingesetzt, wobei eine ausreichende plastizierbarkeit der Oberfläche der Trägerschicht erhalten bleiben muß.

Die Schaumschicht besteht ebenfalls aus einem Propylenpolymerisat, nämlich polypropylen oder einem Propylen-Copolymerisat.

Die Schaumschicht kann vorzugsweise als Partikelschaum aus geschäumten Beads oder nach dem Extrusionsverfahren hergestellt werden. Die Dichte liegt üblicherweise zwischen 10 und 100 g/l.

Als Treibmittel für die Verschäumung eignen sich unter anderem gasförmige, wie beispielsweise Fluorkohlenwasserstoffe, oder feste oder flüssige organische Treibmittel mit einem Zersetzungs- oder Siedepunkt, der unterhalb der Schmelzentemperatur des Polyolefins liegt.

Neben dem Treibmittel können dem Polyolefin noch die üblichen Zusätze wie Licht- und Wärmestabilisatoren, Pigmente, Gleitmittel, Antistatika, Flammschutzmittel und dergleichen zugesetzt werden. Ebenfalls möglich ist der Zusatz von Vernetzungsmitteln. Außerdem kann das zu verwendende Polyolefin noch Füllstoffe in den üblichen und erforderlichen Mengen enthalten, beispielsweise Calciumcarbonat, Kreide, Talkum, Glaskugeln, Silikate von Magnesium und/oder Aluminium, Tonerde, Ruß, Holzmehl.

Besteht die Schaumschicht aus Partikelschaum, kann bei dieser die endgültige Formgebung beispielsweise durch Einfüllen von treibmittelfreien, vorgeschäumnten Beads in ein Werkzeug unter Einleitung von Heißdampf erreicht werden. Wird die Schaumschicht im Extrusionsverfahren hergestellt, kann die endgültige Formgebung unter Temperatureinwirkung beispielsweise nach dem Preß- oder Tiefziehverfahren erfolgen.

Die Trägerschicht wird durch Spritzgießen hergestellt.

Zur Verbindung der Trägerschicht mit der Schaumschicht wird nur die der Schaumschicht zugewandte Oberfläche der Trägerschicht durch Erwärmen plastiziert. Dies kann mittels Heizelement durch Normal- oder Hochtemperaturkontakterwärmung oder berührungslos durch Wärmestrahlung geschehen. Die Wahl der Temperatur des Heizelements und der Heizzeit richtet sich nach dem Fließverhalten des Polymerisats, der Dicke der Trägerschicht und den maschinentechnischen Gegebenenheiten. Neben der Erwärmung durch ein Heizelement kann auch ein heißes Gas zur Plastizierung der Fügeflächen herangezogen werden.

Die der Schaumschicht zugewandte Trägerseite weist erhabene Strukturen auf. Dies können beispielsweise Rippen, Stege, Noppen oder sonstige erhabene Strukturen sein. Aus Gründen der Wirtschaftlichkeit lassen sich solche flächigen Gebilde schneller plastifizieren als eine glatte Oberfläche. Zugleich mindern solche Profilierungen die Verzugsneigung der Trägerschicht.

Unmittelbar nach der Plastizierung der Oberfläche der Trägerschicht werden Trägerschicht und Schaumschicht unter Druck zusammengefügt. Dabei dringt das plastizierte Material der Oberfläche der Trägerschicht teilweise in die Schaumschicht ein und schafft so eine feste Verbindung. Der Druck beträgt 0,1 bis 0,4 N/mm².

Das Fügen von Trägerschicht und Schaumschicht kann auf den üblichen Schweißanlagen durchgeführt werden. Die Verbindung ist so fest, daß bei Zug- und Biegeversuchen Brüche generell im Schaumstoffgefüge entstehen.

Die nachfolgenden Beispiele sollen die Erfindung erläutern.

### Beispiel 1:

Ein Trägerteil aus einem mit 30 % Talkum verstärkten PP-Copolymerisat mit einseitiger Verrippung wurde mit einer Schaumschicht aus PP-Partikelschaum (Dichte 50 g/l) in der Weise verbunden, daß die Stirnflächen der erhabenen Strukturen auf einem auf ca. 250 °C temperierten Heizelement bis zu zu einer Schmelzeschichttiefe von 2-3 mm plastiziert und anschließend mit der Schaumschicht unter einem Anpreßdruck von ca. 0,1-0,2 N/mm² in Kontakt gebracht wurden.

### Beispiel 2:

In gleicher Verfahrensweise wie in Beispiel 1 wurden bei extrem hohen Heizelementtemperaturen (gewählter Bereich: 300-400 °C) die erhabenen Strukturen der Trägerschicht bis zu einer Schmelzeschichttiefe von 2-3 mm plastiziert und anschließend mit der Schaumschicht unter einem Anpreßdurck von 0,1-0,2 N/mm² zusammengefügt. Der Anwärmvorgang lief hierbei aufgrund der extrem kurzen Anwärmzeiten besonders wirtschaftlich ab.

### Beispiel 3:

Die erhabenen Strukturen der Trägerschicht wurden mittels Strahlungserwärmung plastiziert und unter Anpreßdruck mit der Schaumschicht verbunden. Der Luftspalt zwischen Strahlungsquelle und Fügefläche lag zwischen 0,5 und 1 mm. Hierbei wurde die erforderliche Schmelzeschichttiefe von 2-3 mm bei der Heizelementtemperatur von 500-550 °C innerhalb von 8-15 Sekunden erreicht.

Bei Biege- und Zugbelastung auf den hergestellten Verbund entstanden generell Brüche im Schaumgefüge.

Weitere Versuche unter identischen Bedingungen, jedoch mit Trägerschichten aus unverstärktem PP-Homopolymerisat, PP-Copolymerisat sowie mit PP-Homopolymerisat + 30 % chemisch gekoppelter Glasfaser, zeigten gleiche Ergebnisse.

## Patentansprüche

1. Verfahren zur Herstellung eines Verbundkörpers, bestehend aus mindestens einer massiven, durch Spritzgießen hergestellten Trägerschicht aus einem Propylenpolymerisat und einer Schaumschicht aus einem Propylenpolymerisat, durch Verbinden der beiden Schichten, wobei ausschließlich die der Schaumschicht zugewandte, mit erhabenen Strukturen versehene Oberfläche der Trägerschicht durch Erwärmen bis zu einer Schmelzschichttiefe von 2 bis 3 mm plastiziert wird und danach Trägerschicht und Schaumschicht unter einem Druck von 0,1 bis 0,4 N/mm² zusammengefügt werden.

2. Verbundkörper, bestehend aus mindestens einer massiven, durch Spritzgießen hergestellten Trägerschicht aus einem Propylenpolymerisat und einer Schaumschicht aus einem Propylenpolymerisat, hergestellt durch Verbinden der beiden Schichten, wobei ausschließlich die der Schaumschicht zugewandte, mit erhabenen Strukturen versehene Oberfläche der Trägerschicht durch Erwärmen bis zu einer Schmelzschichttiefe von 2 bis 3 mm plastiziert wurde und danach Trägerschicht und Schaumschicht unter einem Druck von 0,1 bis 0,4 N/mm² zusammengefügt wurden.

## Claims

1. A process for the production of a composite comprising at least one solid base layer, produced by injection molding, of a propylene polymer and a foam layer of a propylene polymer by bonding the two layers, where exclusively the surface of the base layer facing the foam layer and provided with relief structures is softened by warming to a melt layer depth of from 2 to 3 mm, and the base layer and foam layer are then joined under a pressure of from 0.1 to 0.4 N/mm².

2. A composite comprising at least one solid base layer, produced by injection molding, of a propylene polymer and a foam layer of a propylene polymer, produced by bonding the two layers, where exclusively the surface of the base layer facing the foam layer and provided with relief structures has been softened by warming to a melt layer depth of from 2 to 3 mm, and the base layer and foam layer have then been joined under a pressure of from 0.1 to 0.4 N/mm².

## Revendications

1. Procédé de fabrication d'un composite constitué d'au moins une couche de support massive, fabriquée par moulage par injection, en un polymère du propylène et d'une couche de mousse en un polymère du propylène, par liaison des deux couches, dans lequel on plastifie exclusivement la surface de la couche de support tournée vers la couche de mousse, munie de structures en relief, par chauffage jusqu'à une profondeur de la couche fondue de 2 à 3 mm, puis on assemble la couche de support et la couche de mousse sous une pression de 0,1 à 0,4 N/mm².

2. Corps composite constitué d'au moins une couche de support massive, fabriquée par moulage par injection, en un polymère du propylène et d'une couche de mousse en un polymère du propylène, fabriqué par liaison des deux couches, dans lequel on plastifie exclusivement la surface de la couche de support tournée vers la couche de mousse, munie de structures en relief, par chauffage jusqu'à une profondeur de la couche fondue de 2 à 3 mm, puis on assemble la couche de support et la couche de mousse sous une pression de 0,1 à 0,4 N/mm².
